# EUROPEAN PATENT APPLICATION

(11) **EP 2 458 561 A2**
(43) Date of publication of application: **30.05.2012**
(21) Application number: 10801983.7
(22) Date of filing: 22.07.2010
(51) Int. Cl.: G06T 19/00, A41H 3/00

(54) **METHOD FOR THREE-DIMENSIONALLY SKETCHING AND MODELLING GARMENTS**

(30) Priority: 23.07.2009 ES 200901636
(71) Applicant: Universidad de Sevilla, 41012 Sevilla (ES)
(72) Inventor: CORDERO VALLE, Juan Manuel, E-41012 Sevilla (ES)
(74) Representative: Temino Ceniceros, Ignacio
(86) International application number: PCT/ES2010/000320
(87) International publication number: WO 2011/009978

(57) **Abstract**

The invention relates to a method for three-dimensionally sketching and modelling garments, configured to automate the process of sketching and/or modelling any garment, which includes: (i) a step of selecting at least one basic garment (2) from a database of basic garments (2), said basic garments (2) being a set of predefined two-dimensional patterns (3); (ii) a step of modifying the basic garment (2) by a plurality of dressmaking and pattern design operations (4) which are applied to the seam lines (5) and the dressmaking and pattern design lines (6) included in the patterns (3) of the basic garments (2); (iii) a step of modifying the basic garment (2) by means of pattern composition operations (3); and (iv) a fourth step of modifying the basic garment (2) via operations for inserting components (7).

## Description

The present invention aims a computer-assisted method which allows the three-dimensionally sketching and modeling of garments, with the object of defining a sketch or model for the routine use of the sketchers. The definition and characterization of new garments is made from other garments which are the base by way of three-dimensional patterns, changing sizes, shapes and components, by applying operations to the use in dressmaking and pattern design which maintain the proportionality relationship between the patterns.

### Background of the invention

There are currently several methods related to the computer-assisted design of garments, such as the patent ES2211357, based on the concept of garment mold, i.e. a three-dimensional prefixed surface that surrounds a body and that is susceptible to be modified. The garment mold is defined by parametric coordinates, where each part that makes up the garment mold has a hollow spindle configuration. It can be modified the shape of the garment mold adjusting its parameters but always maintaining certain overall structure required by the type of used surface. Some parts of the garment mold surface can be hidden to simulate different garments or to define a determined garment. The garment molds can be stacked, forming layers, to simulate the superposition of garments.

This method is not based on the concept of basic garments manipulated through operations to the use in dressmaking and pattern design, but in the manipulation of a parametric surface with the shape of enveloping garment with scaling operations and two-dimensional cut. This method is not based on the manipulation of the garment patterns. This method is not based on the sketch of garments by aggregation of components, nor is based on the projection of the garment operations on patterns.

The patent US7079134 describes a method that allows adapting a garment with measures of a particular virtual mannequin. The method is characterized by import a three dimensional digital representation of a mannequin or a part of the same, on which represents a three-dimensional structure formed by lines defined in transverse and longitudinal planes which allow to modify the dimensions and shape of the garment. The mentioned structure adapts to the mannequin respecting what the inventor designates freedom of movement that is defined as the set of distances from points defined in the lines of the structure to the mannequin surface. The structure can be accompanied of a texture to simulate a real garment. In the mannequin can be defined some anthropomorphic parameters to adapt it to what the author designates position or pose.

This method is not based on the concept of basic garments manipulated through operations to the use in dressmaking and pattern design, but in the shape of a garment from another garment that takes as a basis, i.e., in the creation of a new size for the basic garment. This method is not based on the manipulation of patterns of the garment, nor in the sketching of garments by aggregation of components. This method neither is based on the projection of the garment operations on patterns.

The patent US6907310 describes a method for modifying a basic garment, with a size and a predefined shape. The basic garment modified is selected from a garment catalogue. The new garment, modification of the basic garment, must meet a series of explicitly stipulated restrictions. In order to modify the original basic garment uses a series of points defined on the 2D patterns, called design points associated with regions in the body of a mannequin, which modifies by relocation to obtain a new size and shape. The restrictions mentioned, to obtain the new garment, establish 3D relationships between the design points and the regions in the body of the mannequin. A key concept in the process of custom designing is that the adjustment of the garment to the body of the mannequin is treated holistically (one-piece). 2D patterns used in the representation of the basic garment are obtained from marketed 2D pattern design tools or by scanning of real patterns. Once the user has entered the 2D patterns in the system, he/she must mark manually the points of design on the patterns, which often coincide with the seam lines. This method is not based on the concept of basic garment manipulated through operations to the use in dressmaking and pattern design, but in the shaping of a garment from another garment that takes as a basis (although it is called basic garment), namely, in the creation of a new size for the basic garment. This method is not based on the manipulation of the garment patterns, but in the manipulation of some special points marked on the patterns and which only allow scaling patterns and not other operations to use in dressmaking and pattern design. This method is not based on the sketching of garments by aggregation of components. This method is not based on the projection of the garment operations on patterns.

### Description of the invention

The main problem facing the present invention is that, hitherto, the garments have been designed and manufactured converting a conceptual design, i.e., a sketch, in patterns, which are cut and sewn to produce a garment, thus requiring automation of said process, without depend on the knowledge and skill of the designers and/or the patterns designers to create two-dimensional patterns that form a 3D garment with a size and shape adjusted to the sketch. Typically, this process is carried out initially in a standard single size, which is typically the most common size in the target population. The prototype garment is tested on an artificial mannequin or figurine as close as possible to the standard size, depending on the anthropomorphic parameters of the population. Patterns are adjusted and then sewn to form the garment until a satisfactory result is achieved. The designed garment will then have to be converted to a range of proportional sizes or fits. Each pattern will have to be modified for each size of desired garment. This process, known as scaling, does not consist in the simple linear scaling of dimensions, but that requires adjustment, both sizes and proportions of the different patterns. This depends on the skills and experience of the patterns designers. Moreover, according to the textiles or fabrics that are used in the manufacture of the garment from patterns, the visual results vary, so it is important to make tests with different textiles or fabrics.

It is clear that the problem of these traditional processes lies in its inaccuracy, requiring high levels of experience and personal skills, consuming time and they are expensive to be carried out. It is therefore desirable to provide methods to reduce times and, therefore, also the costs, in the realization of the sketches, as well as obtaining associated patterns.

The present invention solves the technical problems exposed by means of an automated method that enables the three-dimensional sketching and modelling of garments, with the object of defining a sketch or a model to the routine use of the sketchers. The definition and characterization of new garments is made from other garments that serve as basis in the manner of 3D patterns, modifying sizes, shapes and components, through the implementation of operations to use in dressmaking and pattern design that maintain the relationships of proportionality between the patterns.

More specifically, the method for three-dimensionally sketching and modelling garments configured to automate the process of sketching and/or modelling any garment, wherein said method comprises a first step of selecting a three-dimensional representation of an anthropomorphic model or mannequin from a database of mannequins **characterized in that** it also comprises,
(i) a step of selecting at least one basic garment from a database of basic garments, said basic garments being a set of predefined two-dimensional patterns and adapted to the body of the selected mannequin, being, in addition, said patterns linked together by a set of associated restrictions, also predefined for each pattern;
(ii) a step of modifying the basic garment by a plurality of dressmaking and pattern design operations which are applied to the seam lines and the dressmaking and pattern design lines that comprise the patterns of the basic garments (2);
(iii) a step of modifying the basic garment by means of pattern composition operations characterized by linking together the patterns by a plurality of restrictions; and
(iv) a fourth step of modifying the basic garment via operations for inserting components wherein each of said components are linked together by a set of rules.

In a second aspect of the present invention, the device and the system of three-dimensionally sketching and modelling garments are defined, comprising a first database of mannequins, a second database of basic garments, a database for storage of results and means of processing and calculation configured to implement the method described.

Finally, the method and device described allow therefore creating prototypes or sketches that later become designs to use for real clothes, or as a means to perform costume tests or simulations of catwalks.

### Brief description of the figures

Next, a series of drawings which help to a better understanding of the invention and that are specifically related to a embodiment of said invention, that is a non-limitative example of this, will be described in a very brief manner.
FIG. 1. It represents one of the possible usable mannequins, placed in one of the possible views of the same.
FIG. 2. It represents a basic garment: shirt buttoned, fitted, with cup waisted and tailor cuffs.
FIG.3. It represents a conventional 2D sketch.
FIG. 4. It represents a 3D sketch of a dressed mannequin with two garments: shirt of FIG. 2 and a skirt, on the basis of the sketch of FIG. 3.
FIG. 5. It represents the dressmaking and pattern design lines associated with a pattern: rear of the shirt in the FIG. 2.

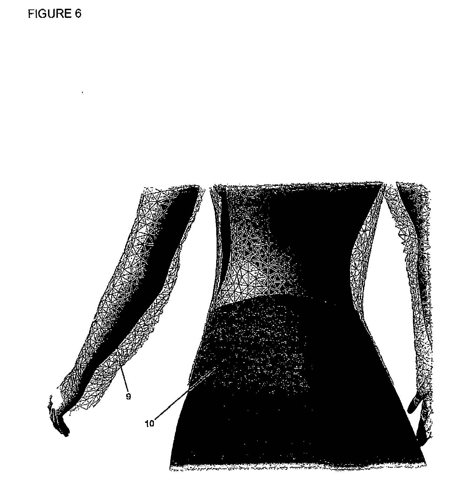

FIG. 6. It represents the mesh of the shirt in the FIG. 4 in the layer 1, on the skirt in the layer 0 of the FIG.4.
FIG. 7. It represents the transformation of a basic garment in a new garment. The shirt of the FIG. 2 appears at the top, and at the bottom it appears the new garment: Rib short sleeve t-shirt with buttoned neckband in neckline, straight body and rounded Italian collar. Transformations arise with application of operations as used in dressmaking and pattern design.
FIG. 8. It represents the patterns that constitute the shirt of the FIG. 2.

The references employed in the figures above are as follows:
- 1.: Mannequin.
- 2.: Basic garment.
- 3.: Pattern.
- 4.: Dressmaking and pattern design operations.
- 5.: Seam lines.
- 6.: Dressmaking and pattern design lines.
- 7.: Components.
- 8.: Pattern sections.
- 9.: Mesh.
- 10.: Mesh.
- 11.: Garment.
- 12.: Garment.
- 13.: Sketch.

### Preferred embodiment of the invention

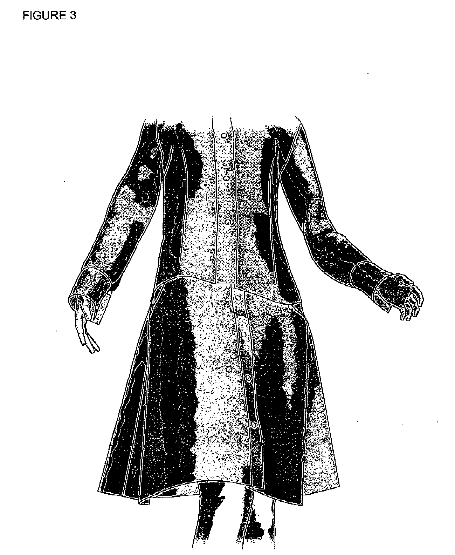

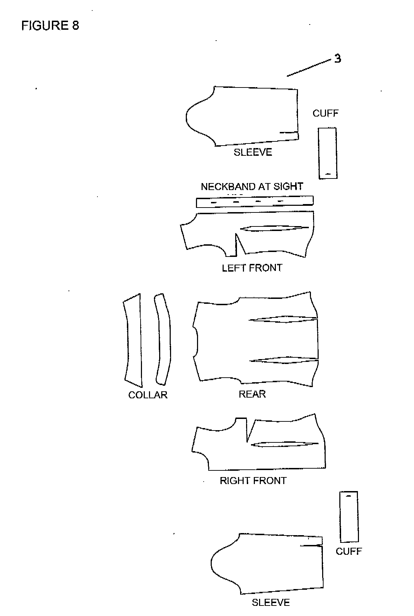

As it has been mentioned the main problem facing the present invention is that, hitherto, the garments have been designed and manufactured converting a conceptual design, i.e., a sketch (fig. 3) in patterns (fig. 8), which are cut and sewn to produce a garment, thus requiring the automation of said process, so that it does not depend on the knowledge and skill of the designers.

This invention, therefore, provides a method automated for three-dimensional sketching and modelling garments that comprises, at least, the following steps:

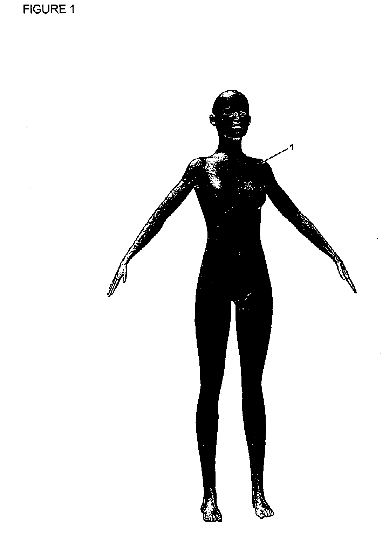

A first step of selecting a three-dimensional representation of an anthropomorphic model, hereafter mannequin (1), from a database or catalogue of mannequins; said mannequin 1 is one of a type selected between women, as shown by the **fig. 1****,** or male, not represented in the accompanying figures. Likewise, the mannequin has its own and selectable features, these features comprising racial typology, size, weight and other anthropomorphic parameters according to the interest of the sketcher. Another possibility in the selection of the mannequin is to use a traditional figurine as standard model.

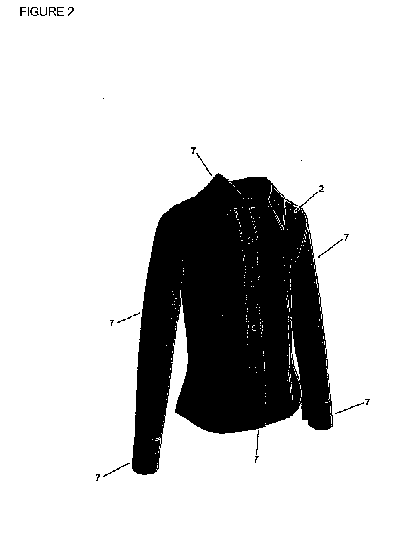

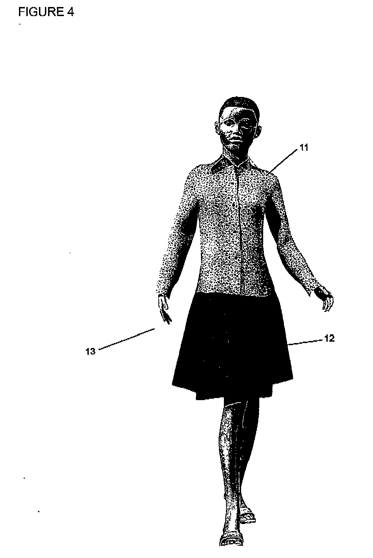

Following the selection of the mannequin comes to a second step of selecting a model garment (2), type or basic, such as it is shown in the **fig. 2****,** from a database of basic garments, hereafter garment catalog. This basic garment (2) is characterized by being a composition of patterns (3) represented in 2D and linked together by a set of restrictions. This basic garment (2) represents a type of standardized garment, as for example a coat, jacket, pants, blouse, etc., in a size appropriate for the mannequin (1) selected in the first step. The basic garment (2) contains information about dimensions, proportions, textiles, fabrics, elements, components and restrictions, as well as the configuration of the same. The selected garment will dress the mannequin (1), as it shows in the **fig. 4** depending on the type of garment and the parameters associated with it. This second step can be repeated as many times as necessary, being necessary to indicate in each repetition, a parameter corresponding to the layer in which the loaded basic garment (2) must be placed. The layers represent levels of depth on a point emphasized and prefixed of the mannequin so that the deeper layer is that one which touches the mannequin (1), and the shallower or outermost layer is that one which comprises the outer garments or those completely at sight. It is also possible to modify the layer to which it must correspond a part of the basic garment, whether an element, section or component, regardless of the rest of the basic garment.

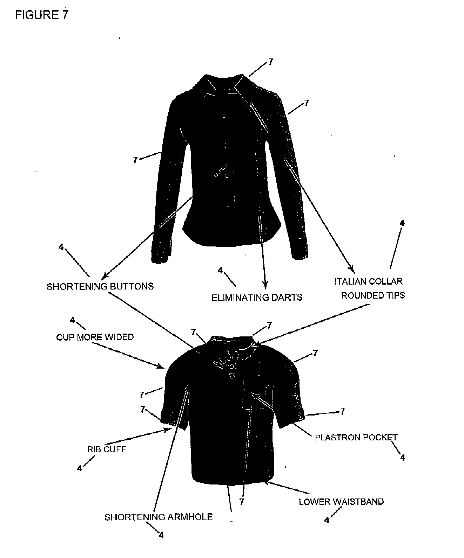

The third step of the method is defined in the **fig. 7** and consist of modifying the basic garments (2) applying operations to use in dressmaking and pattern design (4), said operations comprise, by way of example: shortening buttoned, eliminating darts, inserting Italian collar, rounding tips of the neck, making the cup more wide, inserting rib cuff, rib, shortening the armhole, inserting inner waist-band, inserting pastron pocket and, in general, any operation of dressmaking known to a person skilled in the art. This dressmaking and pattern design operations (4) are applied to the seam lines (5) and to the dressmaking and pattern design lines (6) of the patterns (3) constituting a basic garment (2).

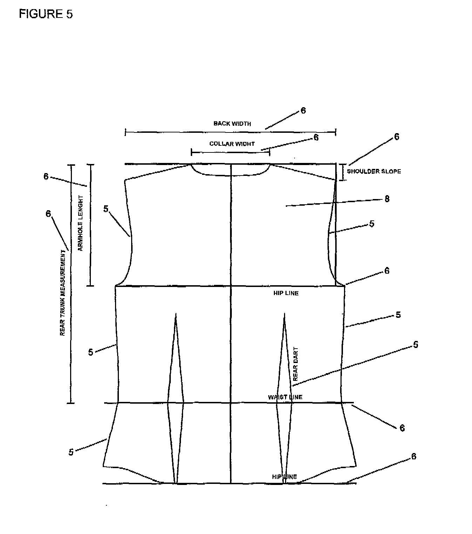

In a fourth stage, the method allows the sketcher to modify the dimensions of the (3) patterns (patterns composition) associated to a basic garment (2), as well as apply it a set of specific restrictions, so that the visual results are consistent with the implicit rules in the system that maintain the proportionality and restrictions defined in patterns (3), as well as the rules of sewing for patterns of the original basic garment (**fig. 5**). For modifying the basic garment (2), it is also possible the use of inserting operations of components (7) by means of a set of rules that allow its linkage.

Finally, the method manages and stores the results in a persistent way, in a means configured to that end, preferably a database, used in working session as a sketch, in order to continue later with the session once reloaded from the storage media.

Ultimately, the method object of the invention allows defining the components of a garment. A garment for the upper part of the body, for example, may be usually composed of sleeves, collar, chest, back, cuffs, pockets, shoulder pads, buttons, waistbands, etc. These components are predefined in the device that implements the method in a database of components. These components, in turn, are defined by patterns and a set of attributes that allow to characterize them. Each type or generic component, hereafter type component, has a set of specific components differentiated by the values of its attributes. For example, the collar-type component can have multiple cases of specific components: Italian collar, English collar, buttoned collar, etc.

In addition, the modification of forms and dimensions of a garment comes from the use of lines associated with the patterns in relation to the garment, as shown in the **fig. 5****,** in such a way that any modification in the shape and size of one of the patterns will be limited by defined rules, which maintains the consistency of the result with regard to the proportionality between patterns (3) and the seaming of the same. These lines correspond to operations as used in dressmaking and pattern design (4), and hereafter they are called as dressmaking and pattern design lines (6). For example, a dressmaking and pattern design line 6 of the patterns of trousers, is the base line, which marks the height from the crotch to the bottom of trousers. A modification of this line, for example, towards the bottom of trousers results in new patterns that make up a trouser with a high waist to the base line.

It is necessary to take into account that the patterns in this method are governed to make up a garment by rules of sewing among them. The rules of sewing define how and where should be joined the patterns, as well as the rules of proportionality between them, so that a modification in a pattern will lead to the modification, if the rules permit, of the rest of patterns.

Mathematically, the method involves a series of functions that define the lines, rules and restrictions mentioned. Thus, the restrictions associated with patterns (3) and representing ligatures or seams between patterns (3) are mathematically represented by polynomial functions defined in pieces and linked in pairs, which maintain the covariance of the functions in the two-dimensional space. The seam lines (5) of the patterns (3), on the other hand, are mathematically defined by segments of concatenated curves, which are piecewise-defined polynomial functions.

The dressmaking and pattern design lines (6) are mathematically defined by segments of curves, representing longitudinal and transverse sections (8) of a pattern (3). These lines (6) are represented by sets of equations with inequalities involving piecewise-defined polynomial functions and setting up the rules of proportionality between patterns (3).

The patterns (3) are defined by a set of piecewise-defined polynomial functions comprising a two-dimensional domain with concave sections and convex sections. Each function share with, al least other function of the same pattern (3), at least a characteristic value, called function node, while each pattern (3) defines a structure of topologically related concave elements contained in the two-dimensional domain space of the pattern (3) called mesh (9, 10).

The dressmaking and pattern design operations (4) allow the elongation, shearing, extrusion and canonical transformations on meshes (9, 10) always validating the rules of sewing and the rules of proportionality.

Modifications and operations applied to a basic garment (2) have associated some specific modifications and operations on the patterns (3) associated with the basic garment (2).

The method object of the invention allows realistic simulation of the mechanical behavior of garments (11, 12) by using the finite elements method, given that the application of the rules of sewing and rules of proportionality comply with the principle of delivery of dynamic components based on the distribution by barycentric coordinates of the finite elements method.

The patterns (3) are grouped to form independent units called components (7), which are labeled, typed and catalogued; and wherein each component (7) can be substituted by a component (7) of the same type in the sketch of a basic garment (2). Said components (7) are associated with a plurality of rules of sewing and proportionality, which are defined for each component (7).

The garments (11, 12) and the components (7) are associated with a value, called layer representing the distance in relation to the mannequin (1) or to other garments (11, 12) or components (7).

Finally, it should be noted that a set of garments (11, 12) and one mannequin (1) constitute a sketch (13).

### Example of implementation of the method object of the resent invention.

Following the steps of the method previously described, it should be selected, first of all, a mannequin from the database of mannequins. Then a basic garment among which there are stored in the database of basic garments is selected. In said database of basic garments are available, among others, the following: coat, bathrobe, anorak, gown, swimsuit, blouse, knickers, bloomers, slips, men's underwear, shirt, t-shirt, nightgown, cape, cardigan, denim jacket, vest, sweatshirt, jacket (American, two buttons, three buttons, open, closed, others), long jacket, underskirt, skirt (trousers, straight, with darts, double fold, with facing fold, layer, pleated, with four seams, others), glove, leotard, short stocking, overalls, trousers (short, long, bib trousers, adjusted, baggy, others), panty, pajamas, pullover, dressing gown, short, sweater, t-shirt and suit.

Once done, we chose, by way of example, the basic garment "Blouse". This garment has a number of predefined seam lines. Among them it is the "Chest Dart", which is selected in order to, subsequently, on this line, carries out, following the method, among other operations, the ones for its use in dressmaking. We chose to run the operation "Change Location". The device at that time requests the location of the new site. We indicate it "Under the Arm".

Then we can continue modifying components and/or garments, inserting new components and/or garments, and carrying out operations on the components and/or garments. For example, if it desirable to insert a component from among those available, among which are, for example: sleeve (straight, narrow, Japanese, bat, raglan, tailored, other), waist, pocket, cuff (straight, rounded, double, others), buttonhole, fastener, button, bracket, collar (flat, sailor, other), clasped, neckline, etc. A new component is inserted, called "Fantasy Patch". The system asks for the location; the desired location is indicated.

The previous step is repeated inserting a new component called "Waistband". The system asks for the location; we indicate that we want it "on the seam of the pocket".

Once located the "Waistband ", it is wanted to perform an operation on the same. Among the available operations for example are: opening, bagging, buttoning up, pebble, quilting, cordoning off, plushing, draping, ruffling, pleating, etc. We run the operation "Sew" on the marked component.

A new operation is executed, but this time on the garment: "Pleat on Shoulder". The system asks for the parameters necessary to carry out the operation correctly.

New operations are executed, also on the garment: 10.a) Pleat on Shoulder; 10.b) Modify dimensions in hip; 10.c) Lift back with pleat; 10.d) Extend hips line; and 10.e) Crossed on chest.

A new component is inserted: "Buttoned". And an operation on this component is carried out: "Sewing on Crossed".

A new basic garment is loaded on the mannequin: "Three-button jacket". The system asks for the layer in which we want to deploy. We indicate "layer 1", that is, over the "Blouse".

The component "Collar" of the garment "Blouse" is marked.

The operation "Modify layer" is executed". We indicate to the system that the attribute "layer" of the component "Collar" of the "Blouse" is 2; that is, the "Three-Buttons Jacket". Thus we achieve the blouse under the jacket but with the collar of the blouse on the lapel of the jacket.

We indicate to the system that stores the sketch that we have designed in the catalogue of sketches.

## Claims

1. Method for three-dimensionally sketching y modelling garments configured to automate the process of sketching y/o modelling any garment, wherein said method comprises a first step of selecting a three-dimensional representation of an anthropomorphic model or mannequin (1) from a database of mannequins **characterized in that** it also comprises,
(i) a step of selecting at least one basic garment (2) from a database of basic garments (2), said basic garments (2) being a set of predefined two-bidimensional patterns (3) and adapted to the body of the selected mannequin (1), being, in addition, said patterns (3) linked together by a set of associated restrictions, also predefined for each pattern (3);
(ii) a step of modifying the basic garment (2) by a plurality of dressmaking and pattern design operations (4) which are applied to the seam lines (5) and the dressmaking and pattern design lines (6) that comprise the patterns (3) of the basic garments (2);
(iii) a step of modifying the basic garment (2) by means of pattern composition operations (3) **characterized by** linking together the patterns (3) by a plurality of restrictions; and
(iv) a fourth step of modifying the basic garment (2) via operations for inserting components (7) wherein each of said components are linked together by a set of rules.

2. Method according to the claim 1 **characterized in that** each basic garment (2) is catalogued and labeled.

3. Method according to the claim 1 and 2 **characterized in that** the restrictions associated with patterns (3) and representing ligatures or seams between patterns (3) are mathematically represented by polynomial functions defined in pieces and linked in pairs, which maintain the covariance of the functions in the two-dimensional space.

4. Method according to the preceding claims **characterized in that** the seam lines (5) of the patterns (3) are mathematically defined by segments of concatenated curves.

5. Method according to the claim 4 **characterized in that** the segments of concatenated curves are piecewise-defined polynomial functions.

6. Method according to the preceding claims **characterized in that** the dressmaking and pattern design lines (6) are mathematically defined by segments of curves.

7. Method according to the claim 6 **characterized in that** the dressmaking and pattern design lines (6) represent longitudinal and transverse sections (8) of a pattern (3).

8. Method according to the claim 1 **characterized in that** the restrictions that represent the dressmaking and pattern design lines (6) are represented by sets of equations with inequalities involving piecewise-defined polynomial functions and setting up the rules of proportionality between patterns (3).

9. Method according to the claim 1 **characterized in that** the patterns (3) are defined by a set of piecewise-defined polynomial functions comprising a two-dimensional domain with concave sections and convex sections.

10. Method according to the claim 9 **characterized in that** each function shares with, at least another function of the same pattern (3), at least one characteristic value, called the function node.

11. Method according to the claim 9 **characterized in that** each pattern (3) defines a structure of topologically related concave elements contained in the two-dimensional domain space of the pattern (3) called mesh (9, 10).

12. Method according to the preceding claims **characterized in that** the dressmaking and pattern design operations (4) provide the elongation, shearing, extrusion and canonical transformations on meshes (9, 10) always validating the rules of sewing and the rules of proportionality.

13. Method according to the preceding claims **characterized in that** the modifications and operations applied to a basic garment (2) have associated some specific modifications and operations on the patterns (3) associated with the basic garment (2).

14. Method according to the claim 13 **characterized in that** the application of the rules of sewing and rules of proportionality comply with the principle of delivery of dynamic components based on the distribution by barycentric coordinates of the method of finite elements.

15. Method according to the claim 1 **characterized in that** the patterns (3) are grouped to form independent units called components (7), which are labeled, typed and catalogued; and wherein each component (7) can be substituted by a component (7) of the same type in the sketch of a basic garment (2).

16. Method according to the claim 15 **characterized in that** the components (7) are associated with a plurality of rules of sewing and proportionality, which are defined for each component (7).

17. Method according to the preceding claims **characterized in that** the garments (11, 12) and the components (7) are associated with a value, called layer representing the distance with regard to the mannequin (1) or to another garments (11, 12) or components.

18. Method according to the claim 1 **characterized in that** a set of garments (11, 12) and one mannequin (1) constitute a sketch (13).

19. Method according to the preceding claims **characterized in that** the modified basic garments (2) are stored in order to be taken subsequently as new basic garments (2), or as garments (11, 12) for a sketch (13).

20. Device for three-dimensionally sketching y modelling garments **characterized in that** comprises a first database of mannequins (1), a second database of basic garments (2), a database for storage of results and means of processing and calculation configured to implement the method of claims 1 to 20.

21. System for three-dimensionally sketching y modelling garments **characterized in that** comprises the device of the claim 20 and means configured to implement the method of claims 1 to 20.

22. System for three-dimensionally sketching y modelling garments **characterized in that** comprises the device of the claim 20 or means configured to implement the method of claims 1 to 20.
